# FASCICULE DE BREVET EUROPEEN

(11) **EP 0 751 528 B1**
(45) Date de publication et mention de la délivrance du brevet: **11.11.1998**
(21) Numéro de dépôt: 96401124.1
(22) Date de dépôt: 23.05.1996
(51) Int. Cl.: G21C 3/34

(54) **Procédé et installation de soudage d'une grille-entretoise d'un assemblage de combustible pour un réacteur nucléaire et dispositif de soudage par l'intérieur d'une grille**
Verfahren und Einrichtung zum Verschweissen eines Abstandhaltergitters eines Kernreaktorbrennstabbündels und Vorrichtung zum Verschweissen vom Gitterinnenraum
Method and installation for welding a spacer grid of a nuclear reactor fuel assembly and apparatus for welding from the grid interior

(30) Priorité: 29.06.1995 FR 9507859
(43) Date de publication de la demande: 02.01.1997
(73) Titulaire: SOCIETE FRANCO-BELGE DE FABRICATION DE COMBUSTIBLES FBFC, F-92400 Courbevoie (FR)
(72) Inventeur: Duthoo, Dominique, 26100 Romans (FR)
(74) Mandataire: Bouget, Lucien

(56) Documents cités:
- EP-A- 0 088 021
- EP-A- 0 104 119
- EP-A- 0 305 944
- EP-A- 0 456 577
- FR-A- 2 532 215
- PATENT ABSTRACTS OF JAPAN vol. 015, no. 030 (P-1157) 24 Janvier 1991 & JP-A-02 271 293 (MITSUBISHI NUCLEAR FUEL CO LTD) 06 Novembre 1990
- PATENT ABSTRACTS OF JAPAN vol. 010, no. 083 (M-466) 02 Avril 1986 & JP-A-60 223 693 (NIHON NIYUKURIA FUYUERU KK) 08 Novembre 1985

## Description

L'invention concerne un procédé et un dispositif de soudage de plaquettes entrecroisées d'une grille-entretoise d'un assemblage de combustible pour un réacteur nucléaire.

Les assemblages de combustible pour réacteur nucléaire et en particulier pour les réacteurs nucléaires refroidis à l'eau sous pression comportent un faisceau d'éléments de combustible de forme cylindrique et de grande longueur appelés crayons qui sont maintenus à l'intérieur d'une ossature de l'assemblage de combustible dans une disposition où les crayons sont tous parallèles entre eux.

L'ossature de l'assemblage de combustible est constituée par des grilles-entretoises comprenant des cellules disposées suivant un réseau régulier destiné à assurer le maintien transversal des crayons de l'assemblage combustible, des tubes-guides engagés dans certaines cellules des grilles-entretoises dont la longueur est supérieure à la longueur des crayons de combustible et des embouts d'extrémité fixés sur les extrémités des tubes-guides et assurant la rigidification de l'ossature et la retenue des crayons de combustible.

Les grilles-entretoises sont réparties suivant la longueur des tubes-guides, à intervalles réguliers, pour assurer le maintien des crayons du faisceau, dans des plans transversaux, suivant un réseau identique au réseau des cellules des grilles-entretoises.

Les grille-entretoises comportent des cellules de forme prismatique qui sont généralement à section carrée et qui sont destinées à recevoir soit un crayon de combustible, soit un tube-guide de l'ossature.

Les grilles-entretoises sont généralement constituées par des plaquettes métalliques entrecroisées disposées suivant deux directions à 90° et délimitant les cellules de forme parallélépipédique à section carrée destinées à recevoir les crayons de combustible et les tubes-guides de l'assemblage. Chacune des plaquettes du réseau à mailles carrées constituant la grille-entretoise recoupe l'ensemble des plaquettes disposées dans une direction à 90° par rapport à la plaquette. Chacune des intersections de deux plaquettes constitue un croisillon ayant quatre angles dièdres à 90° et une arête de jonction commune à quatre cellules de la grille. Les plaquettes sont assemblées par emboîtement puis par soudage suivant les arêtes de jonction communes à quatre cellules de la grille.

Généralement, pour assurer l'assemblage des plaquettes constituant un croisillon suivant une arête, on engage les plaquettes l'une sur l'autre par l'intermédiaire d'une fente occupant la moitié de la largeur de la plaquette.

On réalise dans un premier temps l'assemblage de la grille par engagement des plaquettes les unes avec les autres suivant le réseau à mailles carrées de la grille et par assemblage de la ceinture périphérique de la grille. On effectue ensuite le soudage des plaquettes, l'une sur l'autre, au niveau des points de croisement des plaquettes à l'extrémité des arêtes et on soude les plaquettes périphériques de la grille constituant une ceinture externe assurant la fermeture des cellules périphériques de la grille. Les cellules des grilles-entretoises ont une dimension telle que les crayons de combustible sont engagés avec un jeu assez important à l'intérieur des cellules. Pour assurer le maintien des crayons de combustible à l'intérieur des cellules de la grille, on utilise des moyens de maintien venant en saillie à l'intérieur de chacune des cellules. Ces moyens de maintien peuvent être constitués par des bossettes obtenues par découpage et repoussage du métal des plaquettes vers l'intérieur des cellules et par des ressorts qui peuvent être rapportés sur les parois des cellules constituées par des parties des plaquettes ou formées par découpage et repoussage du métal des plaquettes.

Les tubes-guides sont introduits pratiquement sans jeu à l'intérieur des cellules des grilles-entretoises et peuvent être fixés par soudage sur certaines grilles de l'assemblage de combustible.

Dans une grille-entretoise pour un assemblage de combustible de type classique, chacune des cellules peut comporter par exemple deux jeux de deux bossettes sur deux parois adjacentes et deux ressorts sur deux autres parois adjacentes situées en vis-à-vis des bossettes. Dans les cellules d'une telle grille-entretoise, le crayon de combustible est repoussé par chacun des ressorts sur les deux bossettes situées en vis-à-vis du ressort.

Au moment du montage et du soudage de la grille-entretoise, les plaquettes qui sont assemblées les unes avec les autres comportent les bossettes et les ressorts destinés à venir en saillie à l'intérieur de chacune des cellules de la grille. Les plaquettes comportent de plus d'autres parties découpées et repoussées, telles que des languettes ou des ergots améliorant la rigidité et la tenue de la grille assemblée.

Il peut être nécessaire et avantageux de souder entre elles les plaquettes de la grille-entretoise au niveau de chacune de leurs arêtes constituant l'arête d'un croisillon formé par deux parties de plaquettes assemblées entre elles.

L'un des problèmes rencontrés lors du soudage des grilles-entretoises des assemblages de combustible est relatif à l'échauffement des plaquettes dû au soudage qui peut être à l'origine de déformations de la grille et de l'apparition de contraintes.

On a proposé divers procédés de soudage successif des arêtes d'une grille-entretoise permettant de limiter le plus possible les contraintes et les déformations subies par la grille du fait de l'échauffement dû au soudage.

Par exemple, on propose, dans la demande de brevet EP-A-0 751 529 déposée le même jour que la présente demande, une grille-entretoise pour assemblage de combustible dont les soudures des croisillons sont réalisées par l'extérieur de la grille, successivement, suivant deux plans bissecteurs à 90° des dièdres constituant un croisillon. Les croisillons successifs disposés suivant la longueur d'une plaquette de la grille comportent des soudures successives, suivant une partie de la longueur de l'arête du croisillon au voisinage d'une des faces de la grille, dirigées suivant un premier plan bissecteur de deux dièdres du croisillon puis, pour le croisillon suivant, suivant un second plan bissecteur de deux dièdres du second croisillon à 90° par rapport au premier.

Les soudures au voisinage de la seconde face de la grille sur chacune des arêtes des cellules sont réalisées dans des plans bissecteurs à 90° par rapport aux plans bissecteurs dans lesquels sont situées les soudures des arêtes au voisinage de la première face de la grille.

Un tel procédé permet de limiter de manière importante les contraintes et les déformations subies par la grille lors du soudage du fait de la répartition des lignes de soudure autour d'une même cellule de la grille et à chacune des extrémités de la cellule disposée au voisinage d'une face de la grille.

En outre, le procédé de soudage par faisceau laser est particulièrement bien adapté au cas du soudage des plaquettes dont l'épaisseur est relativement faible et notamment au soudage suivant les arêtes des cellules dont la section est de taille réduite (par exemple de l'ordre de (1 x 1) cm²).

Un problème lié à la fabrication des grilles-entretoises des assemblages de combustible est relatif à la durée d'exécution du soudage du fait du très grand nombre de soudures à réaliser.

Dans le cas du procédé mentionné ci-dessus, il est nécessaire d'effectuer quatre soudures suivant chacune des arêtes de chacune des cellules, du fait que les soudures sont effectuées successivement dans chacun des plans bissecteurs des quatre dièdres de chacun des croisillons.

De ce fait, dans le cas d'une grille comportant 16 x 16 croisillons, le nombre de soudures à réaliser pour l'ensemble des croisillons de la grille est 4 x 16 x 16 = 1024 soudures.

Il est donc nécessaire de disposer d'un procédé de soudage qui permette de réaliser les soudures suivant une séquence permettant de limiter l'apparition des contraintes et déformations dans la grille, avec une durée d'exécution de l'ensemble des soudures de la grille qui soit la plus courte possible.

En outre, les procédés de soudage au laser de grilles-entretoises d'assemblages de combustible connus de l'art antérieur voir EP-A-0 088 021 et EP-A-0 456 577 sont réalisés en dirigeant un faisceau laser sur une extrémité d'une arête de la grille, depuis l'extérieur de la grille, ce qui nécessite de réaliser un guidage optique précis du faisceau laser et une focalisation sur la zone à souder. Dans le cas du soudage de portions d'arêtes de la grille dans des directions bien définies, à l'intérieur des dièdres des cellules, les dispositifs connus s'avèrent peu adaptés.

Le but de l'invention est donc de proposer un procédé de soudage de plaquettes entrecroisées d'une grille-entretoise d'un assemblage de combustible pour un réacteur nucléaire, délimitant des cellules de forme prismatique juxtaposées constituant un réseau dans lequel un ensemble de cellules voisines ont une arête commune suivant laquelle on réalise le soudage d'au moins deux plaquettes constituant un croisillon, ce procédé permettant de réaliser des séquences de soudage susceptibles de limiter l'échauffement, les contraintes et la déformation subies par la grille au cours du soudage et de réaliser l'ensemble des soudures d'une grille-entretoise en un temps réduit, c'est-à-dire avec un coût limité.

Dans ce but :
- on introduit dans chacune des cellules d'un ensemble d'au moins quatre cellules, suivant l'axe de la cellule, un dispositif de soudage par faisceau laser faisant partie d'un ensemble d'au moins quatre dispositifs de soudage, de manière que l'ensemble d'au moins quatre dispositifs de soudage dirige un faisceau laser de soudage suivant au moins quatre arêtes de la grille,
- on effectue simultanément au moins quatre soudures par faisceau laser suivant une partie au moins de la longueur des quatre arêtes, et
- on réalise un déplacement relatif entre la grille et l'ensemble des dispositifs de soudage par faisceau laser, pour introduire les dispositifs de soudage dans au moins quatre nouvelles cellules de la grille.

L'invention est également relative à un dispositif de soudage de plaquettes d'une grille-entretoise selon la revendication 9 par l'intérieur des cellules de forme prismatique de la grille et à une installation de soudage rapide des plaquettes de grilles-entretoises selon la revendication 10.

Afin de bien faire comprendre l'invention, on va maintenant décrire, à titre d'exemple non limitatif, en se référant aux figures jointes en annexe, deux modes de mise en oeuvre d'un procédé de soudage suivant l'invention et un dispositif de soudage permettant de mettre en oeuvre le procédé.

La figure 1 est une vue de dessus d'une partie d'une grille-entretoise d'un assemblage de combustible pour un réacteur nucléaire à eau sous pression.

La figure 2 est une vue en coupe verticale suivant 2-2 de la figure 1.

La figure 3 est une vue en coupe axiale d'un dispositif de soudage par faisceau laser qui peut être utilisé pour la mise en oeuvre du procédé selon l'invention.

La figure 4 est une vue en élévation d'une installation de soudage pour la mise en oeuvre du procédé selon l'invention.

La figure 4A est une vue en perspective du détail A de la figure 4 représentant la tête de soudage.

La figure 5 est une vue schématique en perspective d'un dispositif de soudage réalisant le soudage par faisceau laser d'une arête d'un croisillon d'une grille-entretoise d'assemblage combustible.

La figure 6 est une vue de dessus schématique d'une grille d'assemblage combustible montrant une séquence de soudage des croisillons de la grille, lors de la mise en oeuvre du procédé suivant l'invention et suivant un premier mode de réalisation.

La figure 7 est une vue de dessus analogue à la vue de la figure 6 montrant une réalisation d'une séquence de soudage, lors de la mise en oeuvre du procédé suivant l'invention et suivant un second mode de réalisation.

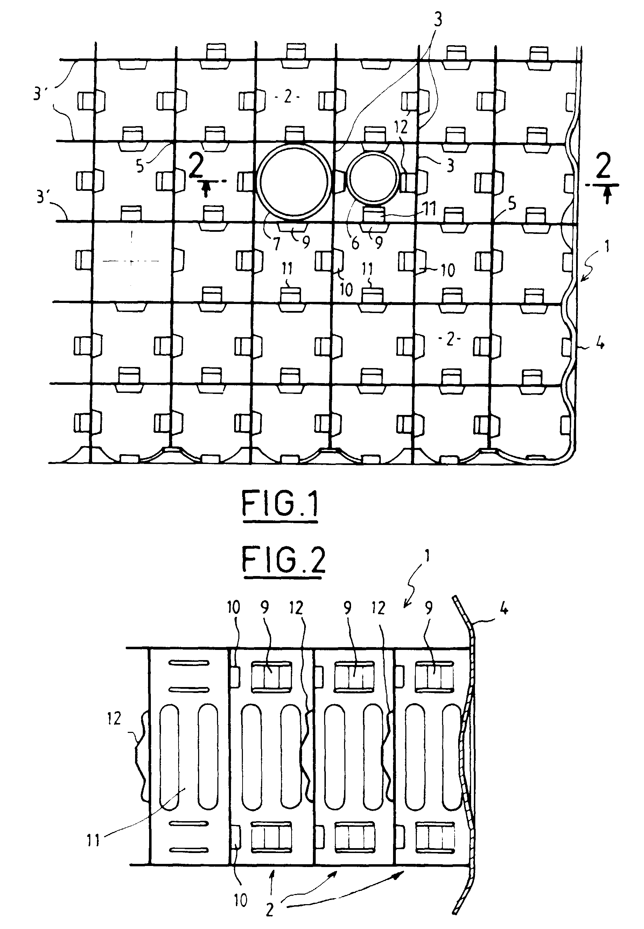

Sur les figures 1 et 2, on voit une partie d'une grille-entretoise d'un assemblage de combustible pour un réacteur nucléaire à eau sous pression désigné de manière générale par le repère 1.

La grille 1 comporte un ensemble de cellules 2 de forme parallélépipédique à section carrée disposées suivant le réseau à maille carrée représenté sur la figure 1.

La grille est constituée par des plaquettes métalliques entrecroisées, un premier ensemble de plaquettes 3 toutes parallèles entre elles ayant une première direction et un second ensemble de plaquettes 3' toutes parallèles entre elles ayant une seconde direction à 90° par rapport à la direction des plaquettes 3. Chacune des cellules 2 de la grille est délimitée par deux plaquettes successives de l'ensemble de plaquettes 3 et deux plaquettes successives de l'ensemble de plaquettes 3'.

Les cellules périphériques de la grille-entretoise comportent une paroi externe constituée par une partie de la ceinture périphérique 4 de la grille-entretoise. Les plaquettes des ensembles 3 et 3' comportent des fentes d'assemblage dont la longueur est égale à la moitié de la largeur de la plaquette et qui sont espacées suivant la longueur de la plaquette d'une distance correspondant au côté d'une cellule 2. Les plaquettes sont assemblées entre elles au niveau des parties comportant les fentes, de sorte qu'elles constituent des croisillons comportant quatre dièdres à 90° ayant une arête commune 5 constituant une arête commune à quatre cellules 2 de forme parallélépipédique à base carrée.

Les cellules 2 de la grille sont destinées à recevoir soit un crayon de combustible 6, soit un tube-guide 7.

Les crayons de combustible 6 ont un diamètre sensiblement inférieur au côté d'une cellule, de sorte qu'il subsiste un jeu entre le crayon 6 introduit dans une cellule 2 et les parois de la cellule constituées par des parties des plaquettes 3 et 3'.

De manière à maintenir les crayons de combustible tels que 6 à l'intérieur d'une cellule 2 de la grille, on réalise par découpage et repoussage de deux parois de la cellule 2, deux ensembles de deux butées 9 et 10 disposés sur deux parois adjacentes de la cellule 2.

Sur les parois de la cellule 2 disposées en vis-à-vis des deux parois comportant les butées 9 et 10, sont prévus respectivement deux ressorts 11 et 12. De ce fait, le crayon 6 est maintenu en contact contre les deux ensembles de butée 9 et 10 par les ressorts 11 et 12. Les ressorts 11 et 12 peuvent être réalisés par découpage et repoussage du métal des parois de la cellule 2 ou rapportés sur les parois des cellules et fixés par engagement dans des ouvertures des parois et soudage.

Sur les figures 1 et 2, on a représenté une grille comportant des ressorts réalisés par découpage et repoussage du métal des parois des cellules 2. Dans ce cas, chacune des parois de cellule comporte deux fentes oblongues entre lesquelles est réalisé un ressort tel que 11 ou 12.

La grille 1 telle que représentée sur les figures 1 et 2 peut être par exemple une grille d'extrémité d'un assemblage de combustible en acier martensitique dans laquelle les bossettes et les ressorts sont réalisés à partir du métal des parois de la grille qui est en acier martensitique traité thermiquement.

Les tubes-guides 7 dont le diamètre est sensiblement supérieur au diamètre des crayons de combustible sont introduits pratiquement sans jeu à l'intérieur des cellules 2 de la grille Dans le cas d'une grille d'extrémité inférieure d'un assemblage de combustible en acier martensitique, les tubes 7 peuvent être fixés sur la grille de manière à assurer une rigidification de l'ossature de l'assemblage.

Un autre type de grille-entretoise pour assemblage de combustible est constitué par des plaquettes en un matériau absorbant faiblement les neutrons, par exemple un alliage de zirconium tel que le Zircaloy 4. Dans ce cas, les bossettes sont réalisées par découpage et repoussage des parois en alliage de zirconium des cellules de la grille et les ressorts sont des ressorts en acier ou en alliage de nickel traité rapportés sur les paroi des cellules.

Dans tous les cas, le soudage des croisillons de la grille est réalisé de la même manière, suivant une séquence de soudage effectuée successivement dans les différents plans bissecteurs des croisillons.

Une méthode particulièrement avantageuse pour souder les croisillons d'une grille-entretoise d'assemblage de combustible met en oeuvre un faisceau laser.

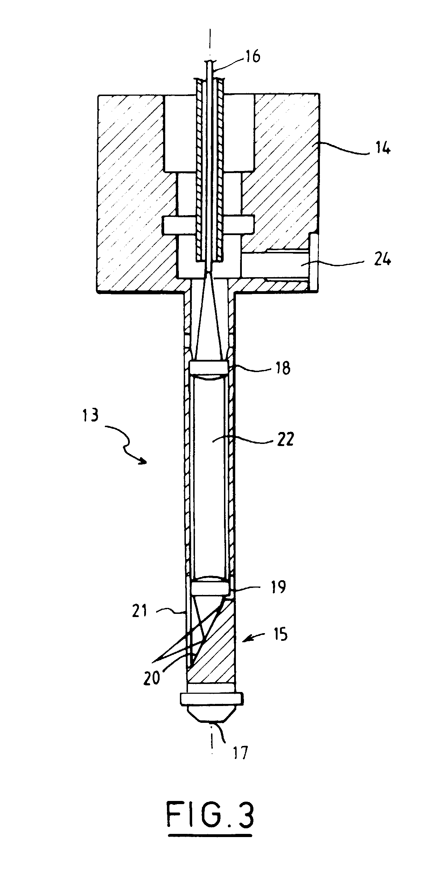

Sur la figure 3, on a représenté un dispositif de soudage par faisceau laser qui peut être utilisé pour réaliser le soudage des croisillons d'une grille-entretoise pré-assemblée, par l'intérieur des cellules de la grille.

Le dispositif représenté sur la figure 3 et désigné de manière générale par le repère 13 comporte un support 14 et un corps cylindrique creux 15 dont le diamètre extérieur est suffisamment petit pour que le corps 15 puisse être introduit axialement dans une cellule de forme prismatique d'une grille. Dans le cas d'une grille à maille carrée, le diamètre du corps 15 du dispositif de soudage est inférieur à la longueur du côté d'une cellule de la grille.

Le support 14 est traversé par un alésage dans le prolongement axial d'un alésage du corps cylindrique 15 réalisé sous forme tubulaire. L'alésage du corps 15 dans lequel est monté un dispositif optique d'alimentation en rayonnement laser de puissance et une fibre optique 16 ayant une extrémité située dans la partie d'entrée du corps 15 se trouve dans le prolongement axial du corps 15 du dispositif de soudage. L'axe commun à l'alésage du support 14 et au corps cylindrique 15 constitue l'axe du dispositif de soudage 13 appelé crayon de soudage par faisceau laser.

A l'intérieur de la partie tubulaire du corps 15 sont disposés un ensemble de lentilles de collimation 18 et un ensemble de lentilles de focalisation 19.

A l'extrémité de la partie tubulaire du corps 15 opposée au support 14 est disposé un miroir 20 en cuivre poli incliné par rapport à l'axe 17 du corps 15 du crayon de soudage 13.

Une fenêtre optique 21 traverse la paroi de la partie tubulaire du corps 15.

L'extrémité de la fibre optique 16 est disposée au voisinage du foyer de l'ensemble de lentilles de collimation 18, de sorte que, lorsque la fibre 16 est alimentée en un rayonnement laser de puissance, un faisceau laser parallèle 22 se propage dans la partie tubulaire du corps 15 pour traverser les lentilles de focalisation avant d'être réfléchi par la surface du miroir 20 de manière à traverser la fenêtre 21. Les lentilles 19 permettent de focaliser le faisceau en un point précis à l'extérieur du corps 15 du crayon de soudage 13. L'ensemble des éléments optiques 18, 19, 20 assure le guidage du faisceau laser, dans le passage central du corps cylindrique creux 15, entre la partie d'entrée du corps 15 et la fenêtre optique 21, puis vers la zone de soudure.

Lorsque le corps 15 du crayon de soudage 13 est introduit dans une cellule d'une grille-entretoise d'un assemblage de combustible, dans la direction axiale de la cellule, c'est-à-dire de manière que l'axe 17 du crayon de soudage 13 soit confondu avec l'axe de la cellule perpendiculaire aux faces de la grille-entretoise, le crayon de soudage est orienté de manière que le faisceau laser 22 soit concourant avec une arête 5 suivant laquelle on veut réaliser un soudage. En outre, les caractéristiques optiques des lentilles de focalisation 19 sont telles que la focalisation du faisceau 22 soit effectuée pratiquement sur l'arête 5, de sorte que la tache focale du faisceau laser 22 sur l'arête suivant l'intersection de deux plaquettes 3 et 3' présente une très faible dimension.

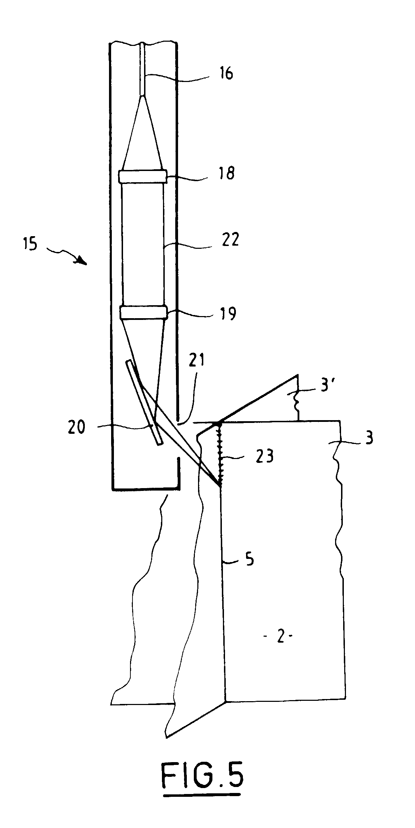

Sur la figure 5, on a représenté de manière schématique le corps 15 d'un crayon de soudage 13 introduit dans une cellule 2 d'un assemblage de combustible, suivant l'axe de la cellule, de manière à réaliser le soudage de l'arête 5 d'un croisillon constitué par l'intersection de deux plaquettes 3 et 3'.

La fibre optique 16 fournit à son extrémité située à l'entrée du corps 15 du crayon de soudage, un rayonnement laser, en un point voisin du foyer de l'ensemble de lentilles de collimation 18. Le faisceau laser parallèle 22 produit par les lentilles de collimation est focalisé par l'ensemble de lentilles de focalisation 19 et réfléchi par le miroir 20 de manière à sortir par la fenêtre 21 du corps 15 du crayon de soudage. Le corps 15 du crayon de soudage est orienté de manière que le faisceau 22 soit concourant avec l'arête 5 du croisillon constitué par les plaquettes 3 et 3' assemblées entre elles à angle droit. Le faisceau 22 est de plus focalisé pratiquement sur l'arête 5. L'énergie transportée par le faisceau laser de puissance permet de fondre le métal des plaquettes 3 et 3' au niveau de l'arête 5. Le déplacement dans la direction de l'axe de la cellule 2, du crayon de soudage 15 permet de réaliser une ligne de soudure 23 suivant une partie de la longueur de l'arête 5, à partir de l'une des faces de la grille-entretoise.

Généralement, la grille-entretoise pré-assemblée est placée dans une disposition horizontale et le soudage par faisceau laser des croisillons de la grille est réalisé suivant une partie de la longueur de l'arête du croisillon, à partir de la face supérieure de la grille-entretoise pré-assemblée et posée à plat et sur une certaine longueur de l'arête de jonction, à partir de la face inférieure de la grille-entretoise pré-assemblée posée à plat.

Le faisceau de soudage laser 22 est dirigé sensiblement suivant un plan diamétral d'un dièdre formé par les plaquettes 3 et 3', pour réaliser un soudage de bonne qualité des plaquettes 3 et 3'.

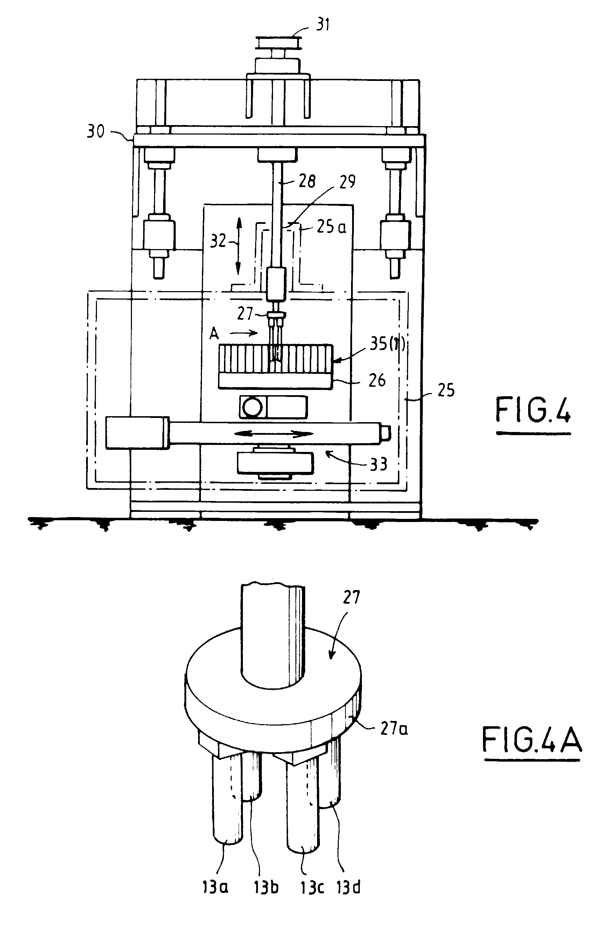

Comme il est visible sur la figure 3, le support 14 du crayon de soudage 13 comporte un ajutage 24 d'alimentation en gaz inerte permettant d'envoyer un courant de gaz inerte dans la zone de soudage où l'on réalise la fusion du métal des plaquettes par le faisceau laser. Sur la figure 4, on a représenté une installation de soudage qui peut être utilisée pour la mise en oeuvre du procédé de soudage suivant l'invention.

L'installation de soudage représentée sur la figure 4 comporte une enceinte 25 qui peut être mise sous atmosphère de gaz inerte pour réaliser le soudage d'une grille-entretoise pré-assemblée 1 qui est disposée horizontalement sur un support 26, à l'intérieur de l'enceinte 25 de l'installation de soudage. Les axes des cellules de la grille sont alors dans une disposition verticale.

L'installation de soudage comporte principalement une tête de soudage 27 fixée à l'extrémité d'un arbre creux 28 traversant de manière étanche et glissante, par l'intermédiaire d'un joint d'étanchéité 29, un manchon de traversée 25a de l'enceinte 25.

L'arbre creux 28 portant la tête de soudage 27 à son extrémité inférieure est relié, à son extrémité supérieure, à une platine 30 qui peut être déplacée dans la direction verticale par un moyen de déplacement 31 comportant un moteur entraînant un ensemble à vis de déplacement. On peut ainsi obtenir un déplacement dans la direction verticale et dans un sens et dans l'autre de l'arbre creux 28 et de la tête de soudage 27, comme représenté par la double flèche 32.

Le support horizontal 26 de la grille 1 est lui-même porté par un ensemble de déplacement à chariots croisés 33 disposé à l'intérieur de l'enceinte 25 permettant de déplacer la grille suivant deux directions à 90° du plan horizontal.

Sur la figure 4A, on a représenté à plus grande échelle la tête de soudage 27 qui comporte un support 27a sur lequel sont fixés quatre crayons de soudage 13a, 13b, 13c, 13d analogues au crayon de soudage 13 représenté sur les figures 3 et 5.

Les crayons de soudage 13a, 13b, 13c et 13d sont fixés sur le support 27a de la tête de soudage 27 de manière que leurs axes constituent quatre arêtes parallèles d'un parallélépipède à section carrée dont le côté est égal au côté d'une cellule de la grille à souder ou à un multiple de ce côté.

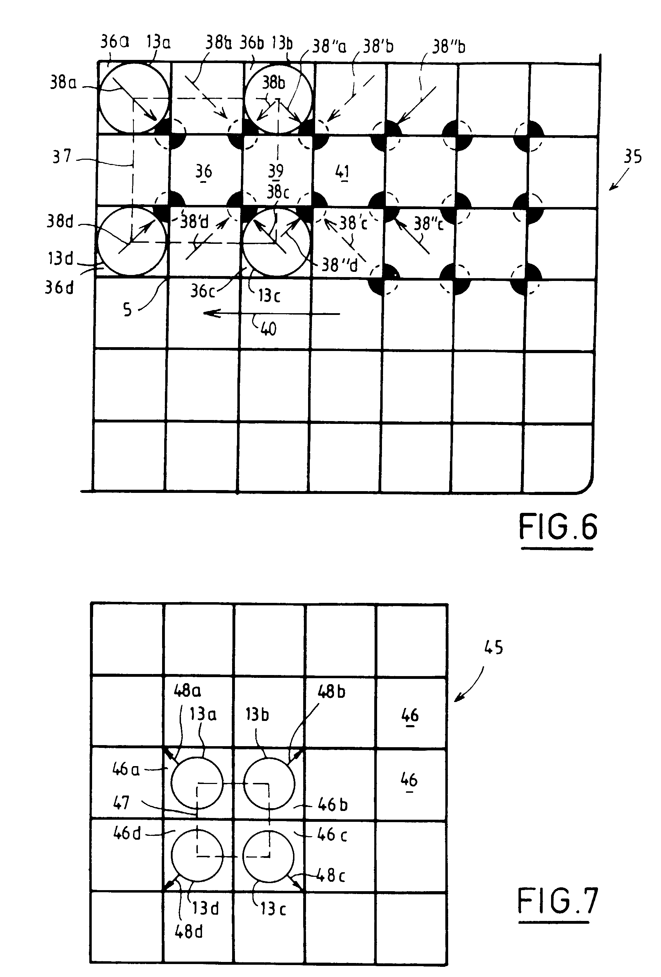

Sur la figure 6, on a représenté de manière schématique une séquence de soudage qui peut être mise en oeuvre en utilisant une tête de soudage 27 dont les quatre dispositifs de soudage 13a, 13b, 13c et 13d sont placés dans une disposition suivant un carré dont le côté est égal à deux fois le côté d'une cellule de la grille.

Les quatre dispositifs de soudage de la tête de soudage peuvent être introduits simultanément dans quatre cellules 36a, 36b, 36c, 36d de la grille 35 représentée sur la figure 6.

Pour réaliser l'introduction des dispositifs de soudage par faisceau laser à l'intérieur des quatre cellules 36a, 36b, 36c, 36d, on place la grille, par déplacement des chariots croisés 33, dans une position telle que les axes de quatre cellules 36a, 36b, 36c, 36d entourant une cellule 36 de la grille se trouvent dans l'alignement des axes des crayons de soudage 13a, 13b, 13c, 13d de la tête de soudage 27.

On déplace alors la tête de soudage dans la direction verticale et vers le bas pour introduire les crayons de soudage dans les quatre cellules entourant la cellule 36, comme représenté sur la figure 6.

Les crayons 13a, 13b, 13c, 13d sont fixés sur le support 27a de la tête 27, de manière que le corps de chacun des crayons introduits dans une cellule soit orienté de manière à diriger un faisceau laser de soudage suivant un plan bissecteur de la cellule contenant une diagonale du carré suivant lequel sont disposés les quatre crayons de soudage.

En se référant à la figure 6, on voit que les axes des crayons de soudage 13a, 13b, 13c et 13d constituent les arêtes d'un parallélépipède dont la base carrée 37 a été représentée sur la figure. Pour simplifier, il sera indiqué par la suite que les crayons de soudage sont disposés suivant le carré 37 dont le côté est égal à deux fois le côté d'une cellule.

Sur la figure 6, on a également indiqué les quatre directions 38a, 38b, 38c et 38d des quatre faisceaux laser de soudage produits par les quatre crayons de soudage introduits dans la grille-entretoise. Les quatre directions de soudage 38a, 38b, 38c et 38d se trouvent chacune dans un plan bissecteur de deux dièdres opposés de l'un des quatre croisillons dont les arêtes sont constituées par les quatre arêtes de la cellule 36. Chacun des plans bissecteurs est commun à un dièdre de la cellule dans laquelle est engagé le crayon de soudage et à un dièdre de la cellule 36.

Le soudage des arêtes de la cellule 36 est donc effectué à partir de quatre cellules entourant la cellule 36 et comportant chacune un croisillon commun et une arête commune avec la cellule 36.

Pour commencer l'opération de soudage par faisceau laser, les quatre crayons de soudage de la tête de soudage sont introduits dans les quatre cellules entourant la cellule 36, de manière que le faisceau laser soit dirigé et focalisé sur une partie de l'arête de la cellule 36 disposée au voisinage de la face supérieure de la grille 35 posée à plat horizontalement sur le support 26 de l'installation de soudage.

On réalise le soudage par les faisceaux laser dirigés suivant les directions 38a, 38b, 38c et 38d, simultanément, sur une portion de la longueur des quatre arêtes de la cellule 36, à partir de la face supérieure de la grille 35. On réalise donc une soudure partielle de l'arête, dans sa partie supérieure et par l'extérieur de la cellule 36.

Les soudures réalisées peuvent être continues et se présenter sous la forme d'un cordon de soudure continu suivant une partie de l'arête de la cellule 36 ou au contraire discontinues et se présenter sous la forme de joints ou de zones de soudures espacées suivant la longueur de l'arête de la cellule 36.

Après la réalisation de cette première série de quatre soudures, on déplace la tête de soudage 27 dans la direction verticale et vers le haut pour extraire les crayons de soudage des quatre cellules 36a, 36b, 36c et 36d.

Il est alors possible de déplacer la grille 35 d'un pas dans la direction des rangées horizontales de cellules. Les crayons de soudage de la tête de soudage sont alors à l'aplomb de quatre cellules entourant la cellule 39 voisine de la cellule 36 sur la rangée horizontale de cellules et ayant chacune un dièdre opposé à un dièdre de la cellule 39.

On déplace alors dans la direction verticale et vers le bas la tête de soudage, de manière à placer les quatre crayons de soudage à l'intérieur des quatre cellules entourant la cellule 39.

Les faisceaux laser de soudage produits par les quatre crayons de soudage sont alors dirigés comme indiqué par les flèches en pointillés 38'a, 38'b, 38'c et 38'd.

Pour réaliser le procédé de soudage tel que décrit plus haut, on déplace les têtes de soudage à l'intérieur des cellules entourant la cellule 39, de manière à réaliser le soudage d'une partie inférieure des arêtes de la cellule 39, à partir de la face inférieure de la grille 35.

Il est également possible, après réalisation des quatre premières soudures autour de la cellule 36, de déplacer la grille 35 de deux pas dans la direction d'une rangée horizontale et dans le sens indiqué par la flèche 40.

Les quatre dispositifs de soudage sont alors à l'aplomb de quatre cellules entourant la cellule 41 et ayant chacune une arête commune avec la cellule 41 et chacune un dièdre opposé à un dièdre de la cellule 41.

Lorsqu'on introduit simultanément les dispositifs de soudage dans les quatre cellules entourant la cellule 41, les directions de soudage des faisceaux laser des quatre dispositifs de soudage peuvent être représentées par les flèches en traits pleins 38"a, 38"b, 38"c et 38"d. On peut alors réaliser le soudage par l'extérieur, de la partie supérieure de chacune des arêtes de la cellule 41.

Les parties supérieures des arêtes de la cellule 39 qui sont communes pour deux d'entre elles avec la cellule 36 et pour les deux autres arêtes avec la cellule 41 sont donc réalisées au cours de deux passes de soudage successives séparées par un déplacement de la grille 35 de deux pas du réseau à mailles carrées. On réalise donc en deux opérations successives le soudage de toutes les parties supérieures des arêtes de trois cellules successives sur une rangée horizontale.

Il est donc possible d'effectuer successivement toutes les soudures des parties supérieures des arêtes des cellules (représentées en noir) sur une rangée de la grille.

On peut effectuer successivement toutes les soudures des parties supérieures des arêtes des cellules, quatre par quatre, par des déplacements successifs de la grille de deux pas dans une direction horizontale ou dans une direction verticale.

On peut également réaliser de préférence toutes les soudures des parties supérieures et les soudures des parties inférieures (représentées en pointillé) des arêtes de la grille par des déplacements successifs de la grille d'un pas dans la direction des rangées horizontales et dans la direction des rangées verticales, en plaçant successivement les crayons de soudage, après déplacement d'un pas de la grille 35, en vis-à-vis de la partie supérieure et en vis-à-vis de la partie inférieure des arêtes de la grille.

En pratique, le balayage de toutes les cellules de la grille n'est pas effectué rangée par rangée mais de manière à réaliser un déplacement en spirale des têtes de soudage par rapport à la grille, en partant du centre de la grille. On limite ainsi les déformations de la grille dues à l'échauffement lors du soudage.

On peut ainsi réaliser de manière automatisée et rapide l'ensemble des soudures de la grille, ces soudures étant effectuées quatre par quatre et suivant une séquence parfaitement déterminée et automatisable.

Comme il est visible sur la figure 7, il est possible d'utiliser un agencement des dispositifs de soudage ou crayons sur la tête de soudage telle que les axes des quatre crayons constituent les arêtes d'un parallélépipède dont la base présente la forme d'un carré ayant pour côté le côté d'une cellule.

Sur la figure 7, on a représenté une portion d'une grille 45 dans laquelle on effectue le soudage par faisceau laser des arêtes des cellules 46 de la grille en utilisant une tête de soudage dont les quatre crayons de soudage 13a, 13b, 13c et 13d sont disposés suivant un carré 47 dont le côté est égal au côté d'une cellule 46 de la grille.

Les quatre dispositifs 13a, 13b, 13c et 13d sont introduits simultanément dans quatre cellules voisines 46a, 46b, 46c et 46d dont les axes sont disposés suivant les arêtes d'un parallélépipède à base carrée dont le côté est égal au côté d'une cellule.

On a également représenté sur la figure 7, les directions 48a, 48b, 48c et 48d des quatre faisceaux de soudage par laser des quatre dispositifs de soudage 13a, 13b, 13c et 13d. Les faisceaux de soudage laser 48a, 48b, 48c, 48d sont dirigés suivant un plan bissecteur de chacune des cellules dans laquelle est introduit le crayon de soudage, ce plan bissecteur contenant une diagonale du carré 47 suivant lequel sont disposées les têtes de soudage. On peut réaliser simultanément le soudage de quatre arêtes des quatre cellules 46a, 46b, 46c et 46d.

Par déplacements successifs de la grille dans les directions des rangées de cellules, entre deux opérations de soudage, et introduction des crayons de soudage dans des ensembles successifs de quatre cellules, on peut réaliser l'ensemble des soudures des arêtes de la grille.

On peut effectuer successivement, en déplaçant la grille d'un pas entre deux opérations de soudage, les soudures voisines de la première face et voisines de la seconde face de la grille.

Dans tous les cas, les opérations de soudage peuvent être réalisées de manière totalement automatisée et avec un temps d'exécution réduit.

L'ensemble des soudures des arêtes de la grille peut être réalisé sans avoir à retourner la grille, en introduisant les dispositifs de soudage dans les cellules à travers l'une des deux faces de la grille ou à travers les deux faces de la grille. On peut réaliser un cordon de soudure à un endroit quelconque le long d'un arbre de la grille. Le dispositif de soudage ou crayon peut passer librement à l'intérieur de la cellule dans laquelle on réalise le soudage ou être autocentré par les bossettes et ressorts en saillie par rapport aux parois de la cellule.

L'invention ne se limite pas au mode de réalisation qui a été décrit.

C'est ainsi que les différents dispositifs de soudage de l'installation de soudage produisant chacun un faisceau laser de puissance peuvent être alimentés chacun par une source laser indépendante ou de manière groupée, par l'intermédiaire d'une ou plusieurs sources et de dispositifs multiplexeurs.

On peut envisager des dispositions des crayons de soudage de la tête de soudage différentes de celles qui ont été décrites et des séquences de soudage adaptées à la disposition de ces électrodes également différentes.

Il est possible de réaliser les déplacements relatifs entre la grille et la tête de soudage, dans les directions perpendiculaires à l'axe des cellules, d'une manière différente. Il est possible, au lieu de déplacer la grille sur une table à mouvements croisés, de laisser la grille immobile et de déplacer uniquement la tête de soudage.

On peut également envisager des déplacements de la tête de soudage dans des directions correspondant à des diagonales des cellules et de la grille.

L'invention s'applique au soudage de toute grille-entretoise pour assemblage de combustible comportant des cellules de forme parallélépipédique constituant un réseau à mailles carrées.

Il serait bien sûr possible également d'envisager une modification de la tête de soudage et des séquences de déplacement de la grille ou de la tête de soudage pour effectuer le soudage d'une grille dont les cellules sont disposées suivant un réseau de forme quelconque.

On pourrait également disposer la grille verticalement, par exemple dans une position sur chant, c'est-à-dire telle qu'elle repose sur un support par l'intermédiaire d'un des côtés de la ceinture et placer au moins une tête de soudage comportant quatre crayons de soudage latéralement par rapport à la grille. Les dispositifs de soudage ou crayons peuvent être placés suivant les arêtes d'un parallélépipède dont la base de forme carrée a un côté qui est un multiple entier quelconque du côté d'une cellule de la grille. Les dispositifs de soudage, lors de la mise en oeuvre du procédé, sont alors introduits dans quatre cellules disposées suivant un carré dont le côté est un multiple entier du côté d'une cellule de la grille.

## Revendications

1. Procédé de soudage de plaquettes entrecroisées (3, 3') d'une grille-entretoise (1, 35, 45) d'un assemblage de combustible pour un réacteur nucléaire, délimitant des cellules (2, 36, 46) de forme prismatique juxtaposées constituant un réseau dans lequel un ensemble de cellules voisines ont une arête commune (5) suivant laquelle on réalise l'assemblage et le soudage d'au moins deux plaquettes (3, 3') constituant un croisillon,
caractérisé par le fait :
- qu'on introduit dans chacune des cellules d'un ensemble d'au moins quatre cellules (36a, 36b, 36c, 36d, 46a, 46b, 46c, 46d), suivant l'axe de la cellule, un dispositif de soudage par faisceau laser (3) faisant partie d'un ensemble d'au moins quatre dispositifs de soudage (13a, 13b, 13c, 13d) de manière que l'ensemble d'au moins quatre dispositifs de soudage dirige un faisceau laser de soudage suivant au moins quatre arêtes (5) de la grille (1, 35, 45),
- qu'on effectue simultanément au moins quatre soudures par faisceau laser suivant une partie au moins de la longueur des quatre arêtes, et
- qu'on réalise un déplacement relatif entre la grille (35, 45) et l'ensemble des dispositifs de soudage par faisceau laser (13a, 13b, 13c, 13d), pour introduire les au moins quatre dispositifs de soudage (13a, 13b, 13c, 13d) dans au moins quatre nouvelles cellules (36a, 36b, 36c, 36d, 46a, 46b, 46c, 46d) de la grille (35, 45).

2. Procédé de soudage suivant la revendication 1, caractérisé par le fait qu'on introduit quatre dispositifs de soudage par faisceau laser dans quatre cellules (36a, 36b, 36c, 36d, 46a, 46b, 46c, 46d) de la grille (1, 35, 45) de forme parallélépipédique à section carrée, ayant une disposition en carré, de manière que chaque dispositif de soudage dirige un faisceau laser de soudage suivant un plan bissecteur de la cellule dans laquelle est introduit le dispositif, contenant une diagonale du carré (37, 47) suivant lequel sont disposées les quatre cellules de l'ensemble de cellules, les quatre arêtes suivant lesquelles on réalise le soudage constituant les arêtes d'un parallélépipède à section carrée.

3. Procédé suivant la revendication 2, caractérisé par le fait que les quatre cellules (36a, 36b, 36c, 36d) dans lesquelles on introduit les quatre dispositifs de soudage (13a, 13b, 13c, 13d) sont disposées suivant un carré dont le côté est un multiple entier du côté d'une cellule (36) de la grille (35).

4. Procédé suivant la revendication 3, caractérisé par le fait que les quatre cellules (36a, 36b, 36c, 36d) dans lesquelles on introduit les quatre dispositifs de soudage (13a, 13b, 13c, 13d) sont disposés suivant un carré dont le côté est le double du côté d'une cellule (36) de la grille (35).

5. Procédé suivant la revendication 2, caractérisé par le fait que les quatre cellules (46a, 46b, 46c, 46d) dans lesquelles on introduit les quatre dispositifs de soudage (13a, 13b, 13c, 13d) sont disposées suivant un carré dont le côté est égal au côté d'une cellule (46) de la grille (45).

6. Procédé suivant l'une quelconque des revendications 2, 3, 4 et 5, caractérisé par le-fait qu'on réalise un déplacement relatif entre la grille (35, 45) et les dispositifs de soudage (13a, 13b, 13c, 13d), entre deux opérations de soudage, dans l'une de deux directions perpendiculaires aux axes des cellules de la grille (35, 45), avec une amplitude égale à deux fois le côté d'une cellule (36, 46) de la grille.

7. Procédé suivant l'une quelconque des revendications 2, 3, 4 et 5, caractérisé par le fait qu'on réalise un déplacement relatif entre la grille (35, 45) et les dispositifs de soudage (13a, 13b, 13c, 13d), entre deux opérations de soudage, dans l'une de deux directions perpendiculaires aux axes des cellules de la grille (35, 45), avec une amplitude égale au côté d'une cellule (36, 46) de la grille, les opérations de soudage étant effectuées successivement au voisinage d'une première face et au voisinage d'une seconde face de la grille (35, 45).

8. Procédé suivant l'une quelconque des revendications 2 à 7, caractérisé par le fait qu'on réalise pour le soudage successif des arêtes des cellules (36, 46) de la grille (35, 45), un déplacement relatif entre la grille (35, 45) et les dispositifs de soudage (13a, 13b, 13c, 13d), dans un plan perpendiculaire aux axes des cellules de la grille (35, 45), suivant une trajectoire ayant une forme en spirale, à partir d'une zone centrale de la grille (35, 45).

9. Dispositif de soudage (13) de plaquettes entrecroisées (3, 3') d'une grille-entretoise (1, 35, 45) d'un assemblage de combustible pour un réacteur nucléaire délimitant des cellules (2, 36, 46) de forme prismatique juxtaposées pour constituer un réseau dans lequel un ensemble de cellules voisines présente une arête commune (5) suivant laquelle on réalise l'assemblage et le soudage d'au moins deux plaquettes (3, 3'), par l'intérieur d'une cellule (2, 36, 46), caractérisé par le fait qu'il comporte :
- un corps cylindrique creux (15) dont le diamètre est suffisamment petit pour que le corps cylindrique (15) puisse être introduit dans une cellule (2, 36, 46) de la grille dans la direction axiale de la cellule (2, 36, 46), comportant une partie d'entrée, une fenêtre de sortie (21) et un passage entre la partie d'entrée et la fenêtre de sortie (21),
- un moyen (16) d'amenée d'un rayonnement laser de puissance à la partie d'entrée du corps creux cylindrique (15), et
- des moyens optiques (18, 19, 20) de guidage du rayonnement laser de puissance entre la partie d'entrée et la fenêtre de sortie (21) et de focalisation, disposés dans le passage du corps cylindrique creux.

10. Installation de soudage de plaquettes entrecroisées d'une grille-entretoise (35) d'un assemblage de combustible pour un réacteur nucléaire délimitant des cellules (36, 46) de forme parallélépipédique à section carrée juxtaposées pour constituer un réseau dans lequel quatre cellules voisines ont une arête commune suivant laquelle on réalise l'assemblage et le soudage de deux plaquettes (3, 3') constituant un croisillon, caractérisée par le fait qu'elle comporte, à l'intérieur d'une enceinte étanche (25), un support (26) horizontal pour recevoir la grille (35) dans une disposition horizontale dans laquelle les axes et les arêtes des cellules (36) de la grille sont verticaux,
- une tête de soudage (27) sur laquelle sont fixés quatre dispositifs de soudage par faisceau laser (13a, 13b, 13c, 13d) de forme sensiblement cylindrique disposés sur le support de manière que leurs axes soient parallèles et disposés suivant les arêtes d'un parallélépipède à base carrée,
- des moyens de déplacement (31) de la tête de soudage (27) dans la direction verticale dans un sens et dans l'autre, et
- des moyens de déplacement (33) relatif du support (26) de la grille (35) et de la tête de soudage (27), dans deux directions à 90° du plan horizontal.

11. Installation suivant la revendication 10, caractérisée par le fait que le support (26) horizontal de la grille-entretoise (35) est monté sur un dispositif (33) de déplacement à chariots à mouvements croisés dans deux directions perpendiculaires du plan horizontal.

12. Installation suivant l'une quelconque des revendications 10 et 11, caractérisée par le fait que chacun des quatre dispositifs de soudage par faisceau laser (13a, 13b, 13c, 13d) de la tête de soudage (27) comporte un corps tubulaire (15) dans lequel sont disposés, successivement suivant l'axe du corps tubulaire, une fibre optique (16) d'alimentation en rayonnement laser, un ensemble de lentilles de collimation (18), un ensemble de lentilles de focalisation (19) et un miroir (20) ayant une surface inclinée par rapport à l'axe du corps tubulaire (15) du dispositif de soudage qui est traversé par une fenêtre (21) dans une disposition latérale par rapport au miroir (20).

13. Installation suivant la revendication 12, caractérisée par le fait que la fibre optique (16) est reliée à un moyen d'alimentation en un rayonnement laser de puissance.

14. Installation suivant la revendication 13, caractérisée par le fait que chacun des dispositifs de soudage par faisceau laser (13a, 13b, 13c, 13d) comporte un ajutage (24) d'alimentation en gaz inerte d'un alésage interne du corps tubulaire (15) du dispositif de soudage.

## Patentansprüche

1. Verfahren zum Verschweißen von sich kreuzenden Platten (3, 3') eines Abstandshaltergitters (1, 35, 45) für Kernreaktorbrennstabbündel, die nebeneinanderliegende Zellen (2, 36, 46) prismatischer Form begrenzen, die ein Netz bilden, in dem eine Gesamtheit benachbarter Zellen eine gemeinsame Kante (5) aufweist, entlang der man den Zusammenbau und die Schweißung wenigstens zweier Platten (3, 3') ausführt, die ein Kreuzgitter bilden, **dadurch gekennzeichnet**:
daß man in jede Zelle einer Gesamtheit von wenigstens vier Zellen (36a, 36b, 36c, 36d, 46a, 46b, 46c, 46d) eine Laserschweißvorrichtung (13), die Teil einer Einheit von wenigstens vier Schweißvorrichtungen (13a, 13b, 13c, 13d) ist, entlang der Zellenkante derart einführt, daß die Einheit aus wenigstens vier Schweißvorrichtungen ein Schweißlaserbündel entlang von wenigstens vier Kanten (5) des Gitters (1, 35, 46) lenkt,
daß man gleichzeitig wenigstens vier Laserschweißungen entlang wenigstens einem Teil der Länge der vier Kanten durchführt, und
daß man eine relative Verschiebung zwischen dem Gitter (35, 45) und der Einheit aus Laserschweißvorrichtungen (13a, 13b, 13c, 13d) ausführt, um wenigstens vier Schweißvorrichtungen (13a, 13b, 13c, 13d) in wenigstens vier neue Zellen (36a, 36b, 36c, 36d, 46a, 46b, 46c, 46d) des Gitters (35, 45) einzuführen.

2. Schweißverfahren nach Anspruch 1, **dadurch gekennzeichnet,** daß man vier Laserschweißvorrichtungen in vier Zellen (36a, 36b, 36c, 36d, 46a, 46b, 46c, 46d) mit parallelepipedischer Form und quadratischem Querschnitt des Gitters (1, 35, 46) einführt, die eine quadratische Anordnung aufweisen derart, daß jede Schweißvorrichtung ein Schweißlaserbündel längs einer Winkelbalbierungsebene der Zelle richtet, in die die Vorrichtung eingeführt wird, wobei jene eine Diagonale des Quadrats (37, 47) enthält, dementsprechend die vier Zellen der Zelleneinheit angeordnet sind, und die vier Kanten, entlang denen man die Schweißung ausführt, die vier Kanten eines Parallelepipeds mit quadratischem Querschnitt bilden.

3. Verfahren nach Anspruch 2, **dadurch gekennzeichnet**, daß die vier Zellen (36a, 36b, 36c, 36d), in die man die vier Schweißvorrichtungen (13a, 13b, 13c, 13d) einführt, in einem Quadrat angeordnet werden, dessen Seite ein ganzes Vielfaches der Seite der Zelle (36) des Gitters (35) ist.

4. Verfahren nach Anspruch 3, **dadurch gekennzeichnet**, daß die vier Zellen (36a, 36b, 36c, 36d), in die man die vier Schweißvorrichtungen (13a, 13b, 13c, 13d) einführt, in einem Quadrat angeordnet werden, dessen Seite das Doppelte der Seite der Zelle (36) des Gitters (35) ist.

5. Verfahren nach Anspruch 2, **dadurch gekennzeichnet**, daß die vier Zellen (46a, 46b, 46c, 46d), in die man die vier Schweißvorrichtungen (13a, 13b, 13c, 13d) einführt, in einem Quadrat angeordnet werden, dessen Seite gleich der Seite der Zelle (36) des Gitters (35) ist.

6. Verfahren nach einem der Ansprüche 2, 3, 4 oder 5, **dadurch gekennzeichnet**, daß man zwischen zwei Schweißoperationen eine relative Verschiebung zwischen dem Gitter (35, 45) und den Laserschweißvorrichtungen (13a, 13b, 13c, 13d) in einer von zwei zu den Achsen der Zellen des Gitters (35, 45) senkrechten Richtungen mit einer Weite gleich dem Zweifachen der Seite einer Zelle (36,46) des Gitters ausführt.

7. Verfahren nach einem der Ansprüche 2, 3, 4 oder 5, **dadurch gekennzeichnet**, daß man zwischen zwei Schweißoperatinen eine relative Verschiebung zwischen dem Gitter (35, 45) und den Schweißvorrichtungen (13a, 13b, 13c, 13d) in einer der zwei zu den Achsen der Zellen des Gitters (35, 45) senkrechten Richtungen mit einer Weite gleich der Seite einer Zelle (36, 46) des Gitters ausführt, wobei die Schweißoperationen nacheinander nahe einer ersten Seite und nahe einer zweiten Seite des Gitters (35, 45) ausgeführt werden.

8. Verfahren nach irgendeinem der Ansprüche 2 bis 7, **dadurch gekennzeichnet,** daß man für die aufeinanderfolgende Schweißung der Kanten der Zellen (36, 46) des Gitters (35, 45) eine relative Verschiebung zwischen den Gitter (35, 45) und den Schweißvorrichtungen (13a, 13b, 13c, 13d) in einer zu den Achsen der Zellen des Gitters (35, 45) senkrechten Ebene auf einer spiralförmigen Bahn von einem Mittenbereich des Gitters (35, 45) ausgehend ausführt.

9. Vorrichtung zum Verschweißen (13) von sich kreuzenden Platten (3, 3') eines Abstandshaltergitters (1, 35, 45) für Kernreaktorbrennstabbündel, die nebeneinanderliegende Zellen (2, 36, 46) prismatischer Form begrenzen, um ein Netz bilden, in dem eine Gesamtheit benachbarter Zellen eine gemeinsame Kante (5) aufweist, entlang der man den Zusammenbau und die Schweißung wenigstens zweier Platten (3, 3') vom Inneren einer Zelle (2, 36, 46) ausführt, **dadurch gekennzeichnet**: daß sie umfaßt:
Einen zylindrischen Hohlkörper (15), dessen Durchmesser ausreichend klein ist, damit der zylindrische Körper (15) in eine Zelle (2, 36, 46) des Gitters in axialer Richtung der Zelle (2, 36, 46) eingeführt werden kann, der einen Einlaßteil, ein Austrittsfenster (21) und einen Durchgang zwischen dem Einlaßteil und dem Austrittsfenster (21) umfaßt,
eine Einrichtung (16) zum Heranführen von Strahlung eines Leistungslasers zu dem Einlaßteil des zylindrischen Hohlkörpers (15), und
optische mittel (18, 19, 20) zur Führung der Strahlung des Leistungslasers zwischen dem Einlaßteil und dem Austrittsfenster (21) und zur Fokussierung, die in dem Durchgang des zylindrischen Hohlkörpers (15) angeordnet sind.

10. Einrichtung zum Verschweißen von sich kreuzenden Platten eines Abstandshaltergitters (35) für Kernreaktorbrennstabbündel, die nebeneinanderliegende Zellen (2, 36, 46) prismatischer Form begrenzen, um ein Netz bilden, in dem vier benachbarte Zellen eine gemeinsame Kante (5) aufweisen, entlang der man den Zusammenbau und die Schweißung wenigstens zweier Platten (3, 3') ausführt, die ein Kreuzgitter bilden, **dadurch gekennzeichnet, daß**
- sie im Inneren einer dichten Kammer (25) eine horizontale Halterung (26) zur Aufnahme des Gitters (35) in einer horizontalen Anordnung umfaßt, in der die Achsen und die Kanten der Zellen (36) des Gitters vertikal sind,
- einen Schweißkopf (27), an dem vier Laserschweißvorrichtungen (13a, 13b, 13c, 13d) im wesentlichen zylindrischer Form befestigt sind, die auf der Halterung derart angeordnet sind, daß ihre Achsen parallel und entlang den Kanten eines Parallelepipeds mit quadratischem Grundriß angeordnet sind,
- Verschiebungsmittel (31) für den Schweißkopf (27) in vertikaler Richtung in beiden Richtungen, und
- Mittel (33) zur relativen Verschiebung der Halterung (26) des Gitters (35) und des Schweißkopfs (27) in zwei Richtungen von 90° in der horizontalen Ebene.

11. Einrichtung nach Anspruch 10 **dadurch gekennzeichnet,** daß die horizontale Halterung (26) des Abstandhaltergitters (35) auf einer Verschiebungswagenvorrichtung mit Kreuzungsbewegungen in zwei senkrechten Richtungen in der horizontalen Ebene angebracht ist.

12. Einrichtung nach einem der Ansprüche 10 oder 11, **dadurch gekennzeichnet**, daß jede der vier Laserschweißvorrichtungen (13a, 13b, 13c, 13d) des Schweißkopfes (27) einen rohrförmigen Körper (15) umfaßt, in dem hintereinander entlang der Achse des rohrförmigen Körpers (15) eine optische Faser (16) zur Zuführung von Laserstrahlung, eine Kollimationslinseneinheit (18), eine Fokussierungslinseneinheit (19) und ein Spiegel (20) angeordnet sind, der eine in bezug auf die Achse des rohrförmigen Körpers (15) der Schweißvorrichtung geneigte Oberfläche aufweist, der von einem Fenster (21) in einer seitlichen Position in bezug auf den Spiegel durchquert ist.

13. Einrichtung nach Anspruch 12, **dadurch gekennzeichnet,** daß die optische Faser (16) mit einer Zuführeinrichtung für Strahlung eines Leistungslasers verbunden ist.

14. Einrichtung nach Anspruch 13, **dadurch gekennzeichnet,** daß jede der Laserschweißvorrichtungen (13a, 13b, 13c, 13d) ein Verbindungsrohr (24) zur Zuführung von Inertgas zu einer Innenbohrung des rohrförmigen Körpers (15) der Schweißvorrichtung aufweist.

## Claims

1. Process for welding intersecting plates (3,3') of a spacer grid (1, 35, 45) of a fuel assembly for a nuclear reactor, defining juxtaposed prismatic cells (2, 36, 46) forming a mesh in which a set of adjacent cells have a common edge (5) along which at least two plates (3,3') constituting a brace are assembled and welded,
characterised in that
- a laser beam welding device (13) forming part of a set of at least four welding devices (13a, 13b, 13c, 13d) is introduced into each of the cells of a set of at least four cells (36a, 36b, 36c, 36d, 46a, 46b, 46c, 46d), along the axis of the cell, so that the set of at least four welding devices directs a welding laser beam along at least four edges (5) of the grid (1, 35, 45),
- at least four laser welds are carried out simultaneously along at least part of the length of the four edges, and
- relative displacement is carried out between the grid (35, 45) and the set of laser beam welding devices (13a, 13b, 13c, 13d) in order to introduce the minimum of four welding devices (13a, 13b,13c, 13d) into at least four new cells (36a, 36b, 36c, 36d, 46a, 46b, 46c, 46d) of the grid (35, 45).

2. Welding process according to claim 1, characterised in that four welding devices (13a, 13b, 13c, 13d) are introduced into four parallelepipedic cells of square cross section (36a, 36b, 36c, 36d, 46a, 46b, 46c, 46d) of the grid (1, 35, 45) in a square configuration, so that each welding device directs a welding laser beam along a plane bisecting the cell into which the device is introduced, containing a diagonal of the square (37, 47) along which the four cells of the set of cells are arranged, the four edges along which welding is carried out constituting the edges of a parallelepiped of square cross section.

3. Process according to claim 2, characterised in that the four cells (36a, 36b, 36c, 36d) into which the four welding devices (13a, 13b, 13c, 13d) are introduced are arranged in a square the side of which is a whole-number multiple of the side of a cell (36) of the grid (35).

4. Process according to claim 3, characterised in that the four cells (36a, 36b, 36c, 36d) into which the four welding devices (13a, 13b, 13c, 13d) are introduced are arranged in a square the side of which is double the side of a cell (36) of the grid (35).

5. Process according to claim 2, characterised in that the four cells (46a, 46b, 46c, 46d) into which the four welding devices (13a, 13b, 13c, 13d) are introduced are arranged in a square the side of which is equal to the side of a cell (46) of the grid (45).

6. Process according to any one of claims 2, 3, 4 and 5, characterised in that a relative displacement is carried out between the grid (35, 45) and the welding devices (13a, 13b, 13c, 13d), between two welding operations, in one of two directions perpendicular to the axes of the cells of the grid (35, 45), with an amplitude equal to twice the side of a cell (36, 46) of the grid.

7. Process according to any one of claims 2, 3, 4 and 5, characterised in that a relative displacement is carried out between the grid (35, 45) and the welding devices (13a, 13b, 13c, 13d), between two welding operations, in one of two directions perpendicular to the axes of the cells of the grid (35, 45) with an amplitude equal to one side of a cell (36, 46) of the grid, the welding operations being carried out successively in the vicinity of a first side and in the vicinity of a second side of the grid (35, 45).

8. Process according to any one of claims 2 to 7, characterised in that, for the successive welding of the edges of the cells (36, 46) of the grid (35, 45), a relative displacement is carried out between the grid (35, 45) and the welding devices (13a, 13b, 13c, 13d), in a plane perpendicular to the axes of the cells of the grid (35, 45), in a spiral trajectory, starting from a central zone of the grid (35, 45).

9. Device (13) for welding the intersecting plates (3,3') of a spacer grid (1, 35, 45) of a fuel assembly for a nuclear reactor, defining prismatic cells (2, 36, 46) juxtaposed so as to form a mesh in which a set of adjacent cells have a common edge (5) along which at least two plates (3,3') are assembled and welded, through the inside of a cell (2, 36, 46), characterised in that it comprises:
- a hollow cylindrical body (15) the diameter of which is small enough for the cylindrical body (15) to be introduced into a cell (2, 36, 46) of the grid in the axial direction of the cell (2, 36, 46), comprising an entry portion, an exit opening (21) and a passage between the entry portion and the exit opening (21),
- intake means (16) for admitting high-power laser radiation into the entry portion of the hollow cylindrical body (15), and
- optical means (18, 19, 20) for guiding the high-power laser radiation between the entry portion and the exit opening (21) and for focussing, which are arranged in the passage of the hollow cylindrical body.

10. Plant for welding the intersecting plates (3,3') of a spacer grid (35) of a fuel assembly for a nuclear reactor, defining parallelepipedic cells (36, 46) of square section juxtaposed to form a mesh in which four adjacent cells have a common edge along which two plates (3, 3') constituting a brace are assembled and welded, characterised in that it comprises, inside a sealed enclosure (25), a horizontal support (26) for accommodating the grid (35) in a horizontal arrangement in which the axes and edges of the cells (36) of the grid are vertical,
- a welding head (27) on which are fixed four laser beam welding devices (13a, 13b, 13c, 13d) of substantially cylindrical shape arranged on the support in such a way that their axes are parallel and located along the edges of a parallelepiped having a square base,
means (31) for moving the welding head (27) vertically in both directions, and
means (33) for moving the support (26) of the grid (35) and the welding head (27) relative to each other in two directions at 90° to the horizontal plane.

11. Plant according to claim 10, characterised in that the horizontal support (26) for the spacer grid (35) is mounted on a carriage-type conveyor apparatus (33) the movements of which are intersected in two directions perpendicular to the horizontal plane.

12. Plant according to either of claims 10 and 11, characterised in that each of the four laser beam welding devices (13a, 13b, 13c, 13d) of the welding head (27) comprises a tubular body (15) in which are arranged successively, along the axis of the tubular body, an optical fibre (16) for supplying laser radiation, a set of collimating lenses (18), a set of focussing lenses (19) and a mirror (20) having a surface which is inclined relative to the axis of the tubular body (15) of the welding apparatus which is traversed by an opening (21) arranged laterally with respect to the mirror (20).

13. Plant according to claim 12, characterised in that the optical fibre (16) is connected to means for supplying high-power laser radiation.

14. Plant according to claim 13, characterised in that each of the laser beam welding devices (13a, 13b, 13c, 13d) comprises a nozzle (24) for supplying inert gas to an internal bore in the tubular member (15) of the welding device.
